# EUROPEAN PATENT APPLICATION

(11) **EP 4 844 215 A1**
(43) Date of publication of application: **25.11.2026**
(21) Application number: 26180787.9
(22) Date of filing: 22.05.2026
(51) Int. Cl.: F02C 7/16, F02C 7/18, F02C 7/12, F02C 7/14

(54) **ENGINE EXHAUST REVERSE FLOW PREVENTION**

(30) Priority: 22.05.2025 US 202519215815
(71) Applicant: Pratt & Whitney Canada Corp., Longueuil, Québec J4G 1A1 (CA)
(72) Inventor: SGOUROMITIS, John, (01BE5) Longueuil, J4G 1A1 (CA); MOHAMMED, Kashif, (01BE5) Longueuil, J4G 1A1 (CA)
(74) Representative: Dehns

(57) **Abstract**

An aircraft engine (10) with a central longitudinal axis (11) includes an exhaust duct (30) receiving a gas flow from the engine (10) and a heat exchanger duct having an air inlet (36) receiving a flow of cooling air (36a), an air outlet (30c) fluidly connected to the exhaust duct (30) at a first height (D1) relative to the axis (11), and a duct wall (38d) extending from the air inlet (36) to the air outlet (30c). An air-cooled heat exchanger (34) is disposed in the heat exchanger duct between the air inlet (36) and the air outlet (30c). The duct wall (38d) has a first section (38a) downstream of the heat exchanger (34) and a second section (38b) downstream of the first section (38a) with a lowermost portion (38e) of the duct wall located at a junction between the first section (38a) and the second section (38b). The lowermost portion (38e) has a maximum second height (D2) relative to the axis that is less than the first height (D1).

## Description

### TECHNICAL FIELD

The disclosure relates generally to aircraft engines, and more particularly, to exhaust flow management in aircraft engines.

### BACKGROUND

In some aircraft engines, a duct for an air-cooled heat exchanger has its outlet coupled to the engine's exhaust duct. As such, the core gas path flowing through the exhaust duct can draw ambient air through the heat exchanger duct. When the engine shuts down and the airflow through the main engine gas path stops, remaining hot exhaust gas in the exhaust duct may vent outwards through the heat exchanger duct. If the heat exchanger includes temperature-sensitive materials such as aluminum, it may be susceptible to temperature-related damage due to the hot exhaust gas flowing therethrough. Improvements are therefore desired.

### SUMMARY

In one aspect of the present invention, there is provided an aircraft engine having a central longitudinal axis, comprising: an exhaust duct receiving a gas flow from the aircraft engine; and a heat exchanger duct having an air inlet receiving a flow of cooling air, an air outlet fluidly connected to the exhaust duct at a first height (D1) relative to the central longitudinal axis, and a duct wall extending from the air inlet to the air outlet, an air-cooled heat exchanger disposed in the heat exchanger duct between the air inlet and the air outlet, the duct wall having a first section downstream of the air-cooled heat exchanger and a second section downstream of the first section with a lowermost portion of the duct wall located at a junction between the first section and the second section, the lowermost portion having a maximum second height (D2) relative to the central longitudinal axis, wherein the second height (D2) is less than the first height (D1).

In an embodiment of the above, the aircraft engine as defined above includes one or more of the following features, in whole or in part, and in any combination.

In an embodiment, the heat exchanger duct has an elbow defining a fluid flow direction change at the lowermost portion of the duct wall.

In an embodiment according to any of the previous embodiments, the elbow is defined by an angled junction between sections of the duct wall.

In an embodiment according to any of the previous embodiments, the duct wall include es a third section between the second section and the air outlet with a local uppermost portion of the duct wall located at a junction between the second section and the third section , the duct wall at the local uppermost portion having a minimum third height (D3) greater than the first height (D1).

In an embodiment according to any of the previous embodiments, the aircraft engine further includes a valve in the duct wall of the heat exchanger duct between the lowermost portion of the duct wall and the air outlet, the valve selectively fluidly connecting the heat exchanger duct to an evacuation location, the valve being movable between a closed position during an operating condition of the aircraft engine to fluidly disconnect the heat exchanger duct to the evacuation location, and an open position during a shutdown condition of the aircraft engine to fluidly connect the heat exchanger duct to the evacuation location.

In an embodiment according to any of the previous embodiments, the valve includes a spring operatively connected to a hinged door, the spring having a spring force biasing the hinged door into the open position, and wherein the flow of cooling air is at a first pressure during the operating condition of the aircraft engine and a second pressure during the shutdown condition of the aircraft engine, a first force generated on the hinged door by the flow of cooling air at the first pressure being greater than a second force generated on the hinged door by the flow of cooling air at the second pressure, the first and second forces opposing the spring force, the spring force being greater than the second force and less than the first force.

In an embodiment according to any of the previous embodiments, the valve is a thermally activated valve, the thermally activated valve operable to bias towards the closed position below a predetermined temperature associated with the operating condition of the aircraft engine and towards the open position above the predetermined temperature.

In an embodiment according to any of the previous embodiments, the evacuation location is an ambient air source adjacent to the aircraft engine.

In an embodiment according to any of the previous embodiments, the aircraft engine further includes an additional duct having an additional duct inlet at a location in the exhaust duct downstream of the air outlet relative to a flow direction of the gas flow through the exhaust duct.

According to another aspect of the present invention, there is provided a heat exchanger duct assembly for an aircraft engine having an engine central longitudinal axis, comprising: a heat exchanger duct having a duct wall extending from an air inlet to an air outlet, the air inlet connectable to a source of pressurized air, the air outlet fluidly connectable to an exhaust duct of the aircraft engine; an air-cooled heat exchanger disposed between the air inlet and the air outlet; a first duct wall portion of the duct wall extending from the air inlet to the air-cooled heat exchanger; and a second duct wall portion of the duct wall extending from the air-cooled heat exchanger to the air outlet, the second duct wall portion including a lowermost portion, an entirety of the duct wall at the lowermost portion being lower than the air outlet relative to the engine central longitudinal axis.

In an embodiment of the above, the heat exchanger duct assembly as defined above includes one or more of the following features, in whole or in part, and in any combination.

In an embodiment according to any of the previous embodiments, to the heat exchanger duct has an elbow defining a fluid flow direction change at the lowermost portion of the duct wall.

In an embodiment according to any of the previous embodiments, the elbow is defined by an angled junction between sections of the duct wall.

In an embodiment according to any of the previous embodiments, the second duct wall portion of the duct wall includes a local uppermost portion between the lowermost portion and the air outlet, an entirety of the duct wall at the local uppermost portion being higher than the air outlet relative to the engine central longitudinal axis.

In an embodiment according to any of the previous embodiments, the heat exchanger duct assembly further includes an evacuation valve in the second duct wall portion between the lowermost portion and the air outlet, the evacuation valve selectively openable for venting exhaust gas from the heat exchanger duct.

In an embodiment according to any of the previous embodiments, the evacuation valve includes a spring having a spring operatively connected to a hinged door, the spring having a spring force biasing the hinged door into an open position, and wherein the pressurized air is at a first pressure during an operating condition of the aircraft engine and a second pressure during a shutdown condition of the aircraft engine, a first force generated on the hinged door by the pressurized air at the first pressure being greater than a second force generated on the hinged door by the pressurized air at the second pressure, the first and second forces opposing the spring force, the spring force being greater than the second force and less than the first force.

In an embodiment according to any of the previous embodiments, the evacuation valve is a thermally activated valve, the thermally activated valve operable to bias closed below a predetermined temperature associated with an operating condition of the aircraft engine and to bias open above the predetermined temperature.

In an embodiment according to any of the previous embodiments, the evacuation valve is operable to selectively evacuate the exhaust gas to an ambient air source adjacent to the aircraft engine at a shutdown condition of the aircraft engine.

According to a further aspect of the present invention, there is provided a method of operating an aircraft engine, comprising: operating the aircraft engine in a powered mode that includes passing a gas through a heat exchanger in a heat exchanger duct towards an exhaust duct of the aircraft engine; and transitioning the aircraft engine from the powered mode into shut down, the transitioning including preventing exhaust gas from flowing from the exhaust duct towards the heat exchanger by navigating the exhaust gas through a diverted airflow pathway in the heat exchanger duct downstream of the heat exchanger, the diverted airflow pathway including a non-linear segment of the heat exchanger duct having a lowermost portion disposed lower than a junction between the heat exchanger duct and the exhaust duct relative to a central longitudinal axis of the aircraft engine.

In an embodiment of the above, the method as defined above includes one or more of the following features, in whole or in part, and in any combination.

In an embodiment according to any of the previous embodiments, the preventing exhaust gas from flowing from the exhaust duct towards the heat exchanger further includes flowing the exhaust gas towards an apex in the heat exchanger duct disposed between the lowermost portion and the junction, the apex disposed higher than the junction relative to the central longitudinal axis of the aircraft engine.

In an embodiment according to any of the previous embodiments, the preventing exhaust gas from flowing from the exhaust duct towards the heat exchanger further includes flowing the exhaust gas through a valve in the heat exchanger duct towards an evacuation location, the valve biased open as the aircraft engine is transitioned to shut down.

### DESCRIPTION OF THE DRAWINGS

Reference is now made to the accompanying figures in which:
FIG. 1 is a schematic cross sectional view of a gas turbine engine;
FIG. 2A is a schematic cross sectional view of an exhaust section of the engine of FIG. 1 in a first engine operational mode, according to an embodiment;
FIG. 2B is a schematic cross sectional view of the exhaust section of FIG. 2A in a second engine operational mode;
FIG. 3A is a schematic cross sectional view of an exhaust section of the engine of FIG. 1 in a first engine operational mode, according to another embodiment; and
FIG. 3B is a schematic cross sectional view of the exhaust section of FIG. 3A in a second engine operational mode.

### DETAILED DESCRIPTION

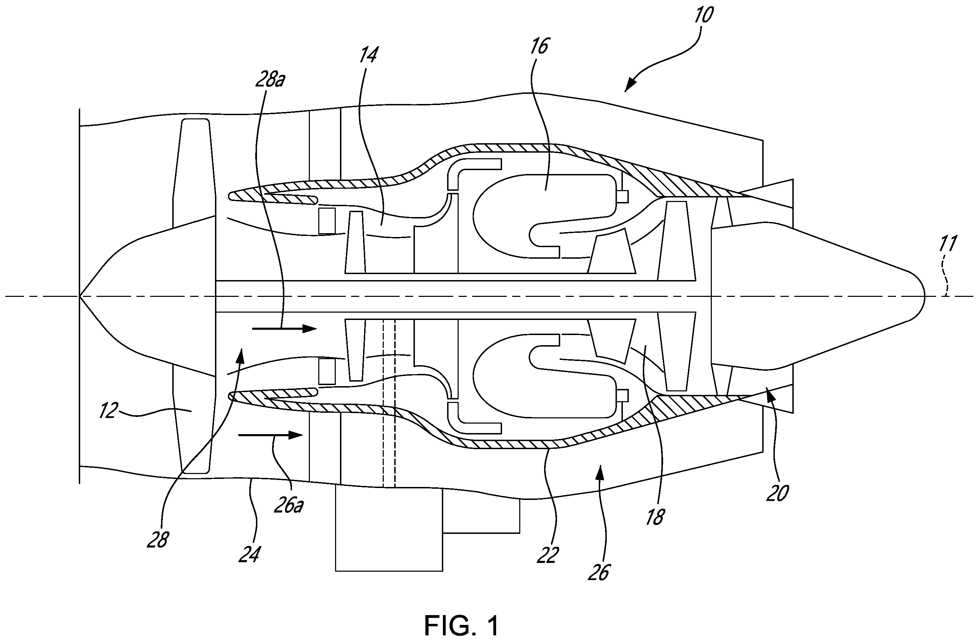

FIG. 1 illustrates a gas turbine engine 10 of a type preferably provided for use in subsonic flight, generally comprising in serial flow communication, along central longitudinal axis 11, a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. Engine 10 further includes an exhaust section 20 where hot combustion gases are expelled. While FIG. 1 depicts engine 10 as a turbofan-type gas turbine engine, the present disclosure may relate to other types of aircraft engines, such as turboprop engines, turboshaft engines, as well as hybrid-electric engines.

The gas turbine engine 10 includes a first, inner casing 22 which encloses the turbo machinery of the engine, and a second, outer casing 24 extending outwardly of the first casing 22 such as to define an annular bypass passage 26 therebetween, also referred to as a bypass duct or an annular outer passage. The air propelled by the fan 12 is split into a first portion which flows around the first casing 22 within the bypass passage 26, and a second portion which flows through a main gas path 28, also referred to as a core passage, which is defined within the first casing 22 and allows the gas flow to circulate through the multistage compressor 14, combustor 16 and turbine section 18 as described above. A core gas flow 28a is said to flow through the main gas path 28 (also referred to as the core gas path), while a bypass gas flow 26a is said to flow through the bypass passage 26.

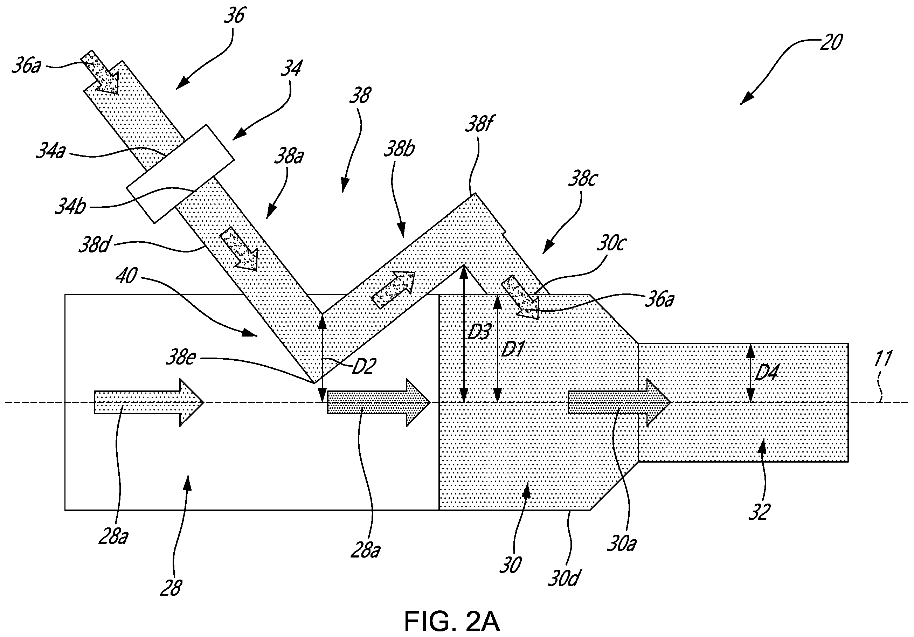

Referring additionally to FIGS. 2A-2B, at the exhaust section 20 at the aft end of the engine 10, the core gas flow 28a and the bypass gas flow 26a are exhausted from the engine 10 through an exhaust duct 30 and an external exhaust 32. In the depicted embodiment, engine 10 further includes an air-cooled heat exchanger 34 disposed adjacent to the exhaust duct 30 and in fluid communication therewith. In an embodiment, the air-cooled heat exchanger 34 is an air-cooled oil cooler, in which warm engine oil is operable to transfer heat to the cool air flowing therethrough. Other types of air-cooled heat exchangers may be contemplated. In particular, the air-cooled heat exchanger 34 receives cooling airflow 36a via an air inlet duct 36, and exhausts the cooling airflow 36a into the exhaust duct 30 via an air outlet duct 38. The outlet duct 38 includes one or more walls 38d. In the shown case, the outlet duct 38 has a rectangular cross-section, although other arrangements may be contemplated. For instance, the outlet duct 38 may have a circular cross-section. The air-cooled heat exchanger 34 includes an inlet 34a receiving the cooling airflow 36a from the inlet duct 36 and an outlet 34b for expelling the cooling airflow 36a through the outlet duct 38 towards the exhaust duct 30. The inlet duct 36 and outlet duct 38 may collectively be referred to as a heat exchanger duct. The cross-sectional shape of the heat exchanger duct may vary, for instance the cross-sectional shape may be circular, square, rectangular or another shape.

According to an embodiment of the present disclosure, the heat exchanger duct includes a diverted airflow pathway 40, also referred to as a diverted air path. In particular, the diverted airflow pathway 40 is disposed in the outlet duct 38 portion of the heat exchanger duct, downstream of the air-cooled heat exchanger 34 and upstream of the exhaust duct 30. The heat exchanger duct, as well as the components found therewithin, may therefore be referred to as a heat exchanger duct assembly. (see FIGS. 2A-2B). As discussed in further detail below, the diverted airflow pathway 40 is adapted for preventing hot exhaust gasses in the exhaust duct 30 from travelling upstream in the heat exchanger duct towards the air-cooled heat exchanger 34 in a shutdown condition of the engine 10.

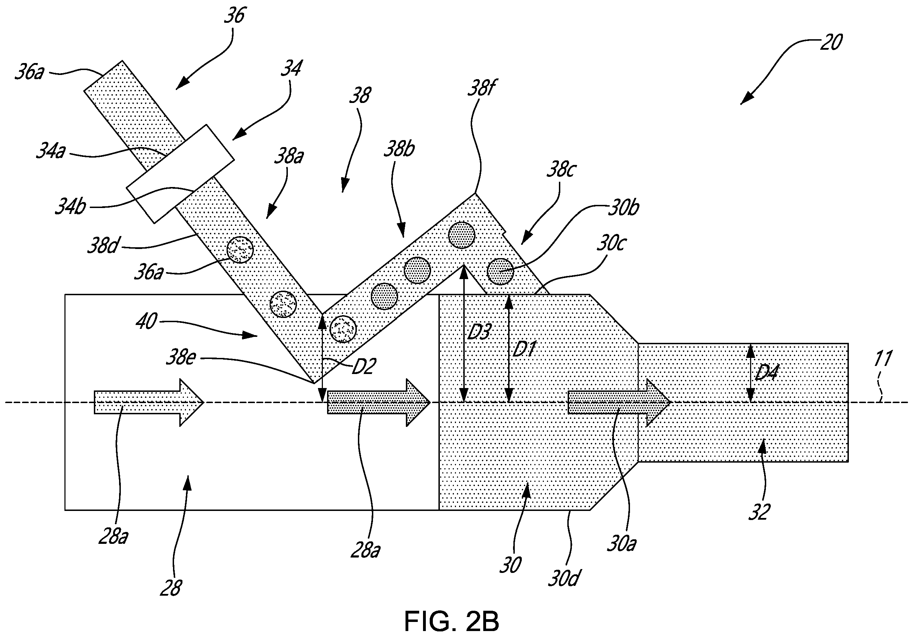

In the shown case, the diverted airflow pathway 40 includes a non-linear portion of the heat exchanger duct between the air-cooled heat exchanger 34 and the air outlet 30c. Illustratively, multiple sections 38a-38c of the outlet duct 38, arranged to allow the cooling airflow 36a to flow into the exhaust duct 30 when the engine 10 is operating (see FIG. 2A), while preventing hot exhaust flows 30a, 30b from travelling upstream in the heat exchanger duct towards the air-cooled heat exchanger 34 in a shutdown condition of the engine 10 (see FIG. 2B). In the shown case, the outlet duct 38 includes a first section 38a extending axially from the outlet 34b of the heat exchanger 34 with a generally downward direction (i.e., towards the longitudinal axis 11), a second section 38b extending axially in a generally upward direction (i.e., away from the longitudinal axis 11) from a junction between the first section 38a and the second section 38b, (referred to as a lowermost portion 38e of the outlet duct 38), and a third section 38c extending axially in a generally downward direction from a junction between second section 38b and the third section 38c (referred to as a local uppermost portion 38f or an apex). The third section 38c fluidly couples the outlet duct 38 to the exhaust duct at an air outlet 30c. In the shown case, the transition between the first section 38a and the second section 38b (i.e., at the lowermost portion 38e), as well as the transition between the second section 38b and the third section 38c (i.e., at the uppermost portion 38f), are referred to as elbows defining a fluid flow change direction. Various elbow geometries are contemplated, for instance curved or angled elbows. Other section numbers and arrangements for the outlet duct 38 are contemplated. For instance, while the depicted outlet duct 38 includes angled bends at the lowermost portion 38e and apex 38f, in other cases these bends are curved. While the depicted diverted outlet duct 38 is formed of multiple (illustratively, three) distinct sections 38a-38c, in other cases the outlet duct 38 includes a single section with smooth (i.e., curved) transitions between the lowermost portion 38e and uppermost portion 38f. Other geometries are contemplated as well.

The air outlet 30c is illustratively located towards an upper region of the exhaust duct 30 relative to the central longitudinal axis 11, at a first height D1 taken from the central longitudinal axis 11. Herein, it is understood that references to heights of various components are in reference to the central longitudinal axis 11. The lowermost portion 38e of the outlet duct 38 is located at a second height D2 that is less than the first height D1 of the air outlet 30c. Stated differently, the lowermost portion 38e of the outlet duct 38 is positioned below the air outlet 30c. For reference, the entirety of the outlet duct 38 at the lowermost portion 38e is disposed below the air outlet 30c. As such, second height D2 is shown as the maximum possible height of the duct wall 38d at the lowermost portion 38e (i.e., at the junction between sections 38a and 38b). In addition, the apex 38f is located at a third height D3 that is greater than the first height D1 of the air outlet 30c. Stated differently, the apex 38f, i.e., the local maximum in the outlet duct 38, is positioned above the air outlet 30c (and thus also above the lowermost portion 38e). For reference, the entirety of the outlet duct 38 at the apex 38f is disposed above the air outlet 30c. As such, third height D3 is shown as the minimum possible height of the duct wall 38d at the apex 38f (i.e., at the junction between sections 38b and 38c). In addition, the outlet duct 32 is shown to have a maximum height, referred to as the fourth height D4. In some embodiments, the second height D2 of the lowermost portion 38e is less than the fourth height D4 of the outlet duct 32 The various heights D1-D4 can vary. In an embodiment, the lowermost portion 38e is disposed below the longitudinal axis 11. In a further embodiment, the lowermost portion 38e is disposed below a lowermost point 30d of the exhaust duct 30. Yet other heights D2 of the lowermost portion 38e are contemplated.

As discussed above, the depicted diverted airflow pathway 40 is arranged so that, in an operating condition of the engine 10 (shown in FIG. 2A), cooling air 36a is allowed to flow from the air-cooled exchanger 34, through the outlet duct 38, and into the exhaust duct 30. Conversely, in a shutdown condition of the engine 10 (shown in FIG. 2B), the hot exhaust flow 30a is prevented, by way of the diverted airflow pathway 40, from flowing upstream in the air outlet 38 towards the air-cooled heat exchanger 34. The diverted airflow pathway 40 may therefore be referred to as a passive means for directing airflow, as its functionality is based on surrounding airflow(s). Advantageously, the arrangement of the diverted airflow pathway 40 may prevent hot gasses (i.e., exhaust flow 30a) from flowing upstream into the outlet duct 38 and through the air-cooled heat exchanger 34 (also referred to as a soak-back condition), which may be susceptible to temperature-related damage such as melting or burning. It is thus understood that the diverted airflow pathway 40 operates in a manner resembling a P-trap, selectively allowing fluid to flow in a first direction while preventing fluid from flowing in the opposite direction.

FIG. 2A illustratively depicts the engine 10 in an operational or running state or condition. Stated differently, the core gas flow 28a flows through the main gas path 28, i.e., through the compressor section 14, combustor 16 and turbine section 18 towards the exhaust section 20 for evacuation from the engine 10, illustratively via external exhaust 32. As the core gas flow 28a passes through the exhaust duct 30, an eductor effect may occur, whereby a cooling airflow 36a is drawn from a cooling airflow source (not shown), through the inlet duct 36 and through the air-cooled heat exchanger 34 before entering the exhaust duct 30 via the outlet duct 38. In embodiments, the cooling airflow source is the bypass gas flow 26a in the bypass passage 26 or ambient air source surrounding the engine 10. In some cases, in addition to or instead of flowing via an eductor effect, the cooling airflow 36a is forcibly driven through the air-cooled heat exchanger 34 towards the exhaust duct 30.

FIG. 2B illustratively depicts the engine 10 in a non-operational or non-running state or condition, for instance after an engine shutdown procedure or condition. Stated differently, the core gas flow 28a is no longer actively flowing through the main gas path 28. Remaining or lingering core gas flow 28a, and exhaust flow 30a, may remain to be evacuated. As the core gas flow 28a and exhaust flow 30a are no longer actively flowing, there would no longer be a strong enough flow to create an eductor effect for drawing the cooling airflow 36a through the air-cooled heat exchanger 34. In addition, in the depicted embodiment, the outlet duct 38 is disposed above, i.e., in an upward direction from, the exhaust duct 30 relative to the longitudinal axis 11. As such, the hot exhaust flow 30a will attempt to evacuate from the exhaust duct 30 upwardly via the outlet duct 38 instead of or in addition to via the external exhaust 32. In other cases, the outlet duct 38 is disposed adjacent or alongside the exhaust duct 30 relative to the longitudinal axis 11. In such a configuration, the adjacent outlet duct 38 can still provide a possible passageway for the hot exhaust flow 30a to evacuate from the exhaust duct 30. In some embodiments, the air-cooled heat exchanger 34 is a temperature-sensitive component, i.e., it includes one or more materials (e.g., aluminum) that are susceptible to damage (e.g., burning or melting) when exposed to excess heat. As such, the geometry of the diverted air pathway 40 prevents hot air from travelling upstream towards the air-cooled heat exchanger 34. Heat-related damage to the air-cooled heat exchanger 34 due to exposure to the hot exhaust flow 30a may thus be prevented.

In an exemplary embodiment, the core gas flow 28a exiting the main gas path 28 and the exhaust flow 30a are at temperatures of around 1000 degrees Fahrenheit. If such gases were to flow upstream into the outlet duct 38, they can melt, burn or otherwise damage one or more components of the air-cooled heat exchanger 34. In addition, in embodiments, the various tubes and fittings joining the air-cooled heat exchanger 34 to the heat exchanger duct are susceptible to high temperature-related damage. The arrangement of the diverted airflow pathway 40 is adapted to prevent such damage.

As discussed above, the diverted airflow pathway 40 includes multiple sections 38a-38c of the outlet duct 38, with the first section 38a extending between the outlet 34b of the heat exchanger 34 and lowermost portion 38e, the second extending between the lowermost portion 38e and the apex 38f, and the third section extending between the apex 38f and an air outlet 30c, with the lowermost portion 38e being at a lower height D2 than the height D1 of the air outlet 30c. As such, in the shutdown condition of the engine 10 (see FIG. 2B), the hot exhaust flow 30b rising through the outlet duct 38 is prevented from flowing towards the air-cooled heat exchanger 34 by way of the arrangement of the diverted airflow pathway 40. In particular, while the hot temperature of the hot exhaust flow 30b can cause the hot exhaust flow 30b to rise in the outlet duct 38, the geometry of the diverted airflow pathway 40 prevents or blocks the hot exhaust flow 30b from rising towards the air-cooled heat exchanger 34. Stated differently, due to its buoyancy, while the rising hot exhaust flow 30b will flow upstream through the third section 38c, it will not flow upstream through the second section 38b due to its generally downward (i.e., towards the axis 11) path. As such, the hot exhaust flow 30b will become trapped in the apex 38f and will not flow upstream towards the air-cooled heat exchanger 34. In the operating condition of the engine (see FIG. 2A), however, the arrangement of the sections 38a-38c of the outlet duct 38 allows the cooling airflow 36a to navigate the diverted airflow pathway 40 and flow towards the exhaust duct 30. In some embodiments, an additional duct is provided with an inlet through a wall of the exhaust duct 30 an axial location downstream of the air outlet 30c of the heat exchanger duct. The additional duct provides an alternate path (i.e., distinct from the heat exchanger duct) through which rising hot exhaust flow 30a can flow. In some embodiments, the additional duct has an outlet that meets the external exhaust 32, although other locations are contemplated.

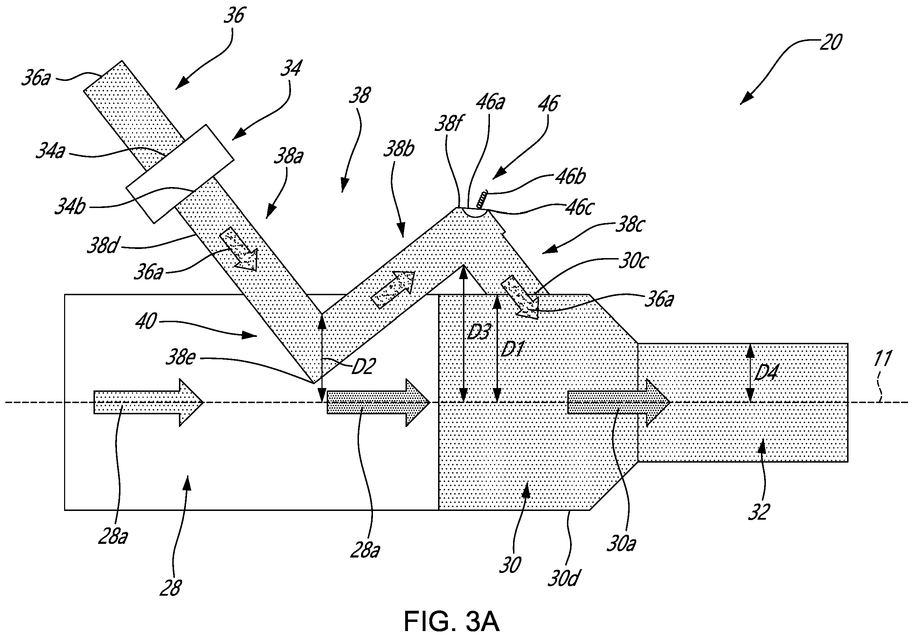

Referring now to FIGS. 3A-3B, in another embodiment, the diverted airflow pathway 40 further includes an evacuation valve 46 for selectively evacuating hot exhaust gas 30a to an evacuation location, as will be discussed in further detail below. It is understood that the geometry of the diverted airflow pathway 40, including the three sections 38a-38c of the outlet duct 38 with the lowermost portion 38e and apex 38f, in the embodiment of FIGS. 3A-3B resembles that of the embodiment of FIGS. 2A-2B but for the addition of the evacuation valve 46.

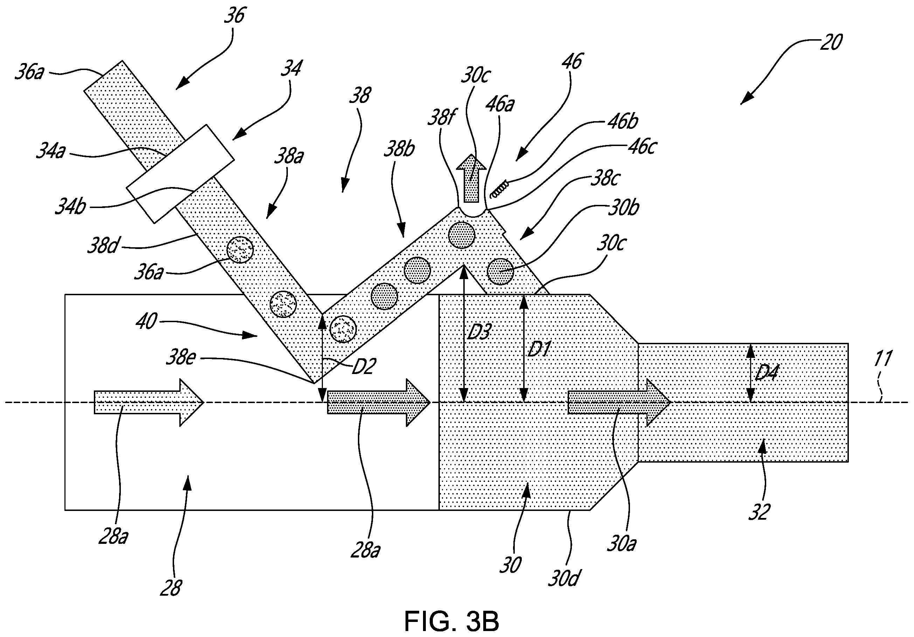

In particular, the depicted diverted airflow pathway 40 is arranged so that, in an operating condition of the engine 10 (shown in FIG. 3A), cooling air 36a is allowed to flow from the air-cooled exchanger 34, through the outlet duct 38, and into the exhaust duct 30 while maintaining the valve 46 in a closed position. In a shutdown condition of the engine 10 (shown in FIG. 3B), the hot exhaust flow 30a is prevented, by way of the diverted airflow pathway 40, from flowing upstream in the air outlet 38 towards the air-cooled heat exchanger 34. Instead, the hot exhaust flow 30a is evacuated via the valve 46 (now in an open position) to an evacuation location. As will be discussed in further detail below, the valve 46 is movable between the open and closed positions or configurations based on an alteration of an operational condition or state of the engine 10. Stated differently, the valve 46 assumes its closed position in an engine operational condition (i.e., when then engine 10 is running), and assumes its open position in an engine shutdown state. As will be discussed in further detail below, in embodiments, the position of the valve 46 (and thus the operating condition of the engine 10) corresponds to the presence or absence of the cooling airflow 36a flowing through the air-cooled heat exchanger 34 towards the exhaust duct 30. In such cases, the presence or absence of the flowing cooling airflow 36a, and thus the air pressure of the cooling airflow 36a, causes the valve 46 to open or close. Other engine airflows may directly or indirectly affect the open or closed positions of the valve 46, as will be discussed in further detail below. The diverted airflow pathway 40 may therefore be referred to as a passive means for directing airflow, as its functionality is based on surrounding airflow(s). Advantageously, the arrangement of the diverted airflow pathway 40 and the selective opening of the valve 46 prevents hot gasses (i.e., exhaust flow 30a) from flowing upstream into the outlet duct 38 and through the air-cooled heat exchanger 34 (also referred to as a soak-back condition), which may be susceptible to temperature-related damage such as melting or burning.

In embodiments, the cooling airflow 36a exiting the air-cooled heat exchanger 34 flows at a flow rate above a predetermined flow rate required to maintain the valve 46 in its closed position. In addition, the diverted airflow pathway 40 is arranged so that the cooling airflow 36a is operable to flow from the air-cooled heat exchanger 34 towards the exhaust duct 30, as will be discussed in further detail below. As such, while the engine 10 is in its operational state and the cooling airflow 36a is flowing through the inlet duct 36, the air-cooled heat exchanger 34 and the outlet duct 38 towards the exhaust duct 30, the valve 46 is maintained in its closed position.

FIG. 3B illustratively depicts the engine 10 in a non-operational or non-running state or condition, for instance after an engine shutdown procedure or condition. Stated differently, the core gas flow 28a is no longer actively flowing through the main gas path 28. Remaining or lingering core gas flow 28a, and exhaust flow 30a, may remain to be evacuated. As the core gas flow 28a and exhaust flow 30a are no longer actively flowing, there would no longer be a strong enough flow to create an eductor effect for drawing the cooling airflow 36a through the air-cooled heat exchanger 34. In addition, in the depicted embodiment, the outlet duct 38 is disposed above, i.e., in an upward direction from, the exhaust duct 30 relative to the longitudinal axis 11. As such, the hot exhaust flow 30a will attempt to evacuate from the exhaust duct 30 upwardly via the outlet duct 38 instead of or in addition to via the external exhaust 32. In other cases, the outlet duct 38 is disposed adjacent or alongside the exhaust duct 30 relative to the longitudinal axis 11. In such a configuration, the adjacent outlet duct 38 can still provide a possible passageway for the hot exhaust flow 30a to evacuate from the exhaust duct 30. In some embodiments, the air-cooled heat exchanger 34 is a temperature-sensitive component, i.e., it includes one or more materials (e.g., aluminum) that are susceptible to damage (e.g., burning or melting) when exposed to excess heat. As such, the decreased flow rate of the flowing cooling airflow 36a, indicative of the engine 10 entering a shutdown phase, and/or the presence of the hot exhaust flow 30a in the outlet duct 38, results in the valve 46 transitioning to its open position, thereby allowing the hot exhaust flow 30a accumulating adjacent to the apex 38f to be evacuated to the evacuation location, further preventing (along with the geometry of the diverted airflow pathway 40) the hot exhaust flow 30a from travelling upstream through the outlet duct 38 towards the air-cooled heat exchanger 34. The evacuation location is, for instance, a safe location or zone in which the hot exhaust flow 30a is directed to a source of ambient air in or adjacent to the engine 10. Heat-related damage to the air-cooled heat exchanger 34 due to exposure to the hot exhaust flow 30a may thus be prevented.

In the shown embodiment, but not necessarily the case in all embodiments, the evacuation valve 46 is a spring-activated door through the duct wall 38d comprising a door 46a, a spring 46b, and a hinge 46c. In the shown case, the valve 46 is disposed adjacent to the apex 38f in the outlet duct 38 (i.e., between the second and third sections 38b, 38c). As such, rising hot exhaust flow 30b will naturally continue rising through the opening defined by the open door 46a when the engine 10 is in the non-operational condition. Other valve locations along the duct wall 38d are contemplated. A force generated on the door 46a by the spring 46b illustratively will bias the door 46a open, as shown in FIG. 3B, in the shutdown condition of the engine 10, thereby allowing the hot exhaust flow 30b to evacuate the outlet duct 38 towards the evacuation location. In the operating condition of the engine 10, the flow of the cooling airflow 36a generates a force against the door 46a that is opposite to and greater than the force of the spring 46b, thereby closing the door 46a. In an embodiment, the valve 46 can thus be referred to as a passive valve, as it is biased between its open and closed positions based on the presence or absence of certain airflows in the outlet duct 38.

In an embodiment, the spring 46b has a spring force biasing the hinged door 46a into an open position. Pressurized air (i.e., cooling airflow 36a) is at a first pressure during an operating condition of the engine 10 and a second pressure during a shutdown condition of the engine 10. A first force generated on the hinged door 46a by the pressurized air at the first pressure is greater than a second force generated on the hinged door 46a by the pressurized air at the second pressure, with the first and second forces opposing the spring force. The spring force is greater than the second force and less than the first force. As such, in the operating condition of the engine 10, the first force is operable to maintain the door 46a in the closed position (despite the spring force attempting to bias the door 46a into the open position). On the contrary, in the shutdown condition of the engine 10, the second force is insufficient to oppose the spring force, and as such the door 46a will be biased into the open position.

As such, in the shutdown condition of the engine 10 (see FIG. 3B), the hot exhaust flow 30b rising through the outlet duct 38 is prevented from flowing towards the air-cooled heat exchanger 34 by way of the arrangement of the diverted airflow pathway 40. In particular, the hot temperature of the hot exhaust flow 30b forces the hot exhaust flow 30b to rise in the outlet duct 38, with the geometry of the diverted airflow pathway 40 preventing or blocking the hot exhaust flow 30b from rising towards the air-cooled heat exchanger 34. Rather, the hot exhaust flow 30b is evacuated, via the evacuation valve 46, to the evacuation location. In the operating condition of the engine (see FIG. 3A), the arrangement of the diverted airflow pathway 40 allows the cooling airflow 36a to navigate the diverted airflow pathway 40 and flow towards the exhaust duct 30.

In other cases, the spring 46b is omitted, and the hinged door 46a biases open or closed solely based on the flow of gases through the outlet duct 38. For instance, in the operating condition of the engine 10, the cooling airflow 36a biases or maintains the door 46a in the closed position due to negative pressure in the outlet duct 38. In the shutdown condition of the engine 10, the hot exhaust flow 30b biases the door 46a to the open position due to positive pressure in the outlet duct 38. Other valve types may be contemplated, for instance, a thermally activated valve operable to bias towards the valve towards the closed position below a predetermined temperature associated with the operating condition of the engine 10 (e.g., indicative of the presence of the cooling airflow 36a in the outlet duct 38) and towards the open position above the predetermined temperature (e.g., indicative of the presence of hot exhaust flow in the outlet duct 38). Yet other valve types may be contemplated, such as mechanically-activated (e.g., solenoid) valves.

In accordance with the present disclosure, an exemplary method is shown for operating an aircraft engine 10. The aircraft engine 10 is operated in a powered mode that includes passing a gas through a heat exchanger 34 towards an exhaust duct 30 of the aircraft engine 10. The aircraft engine is transitioned from the powered mode into shut down, the transitioning including preventing exhaust gas 30a from flowing from the exhaust duct 30 towards the heat exchanger 34 by navigating the exhaust gas through a diverted airflow pathway in the heat exchanger duct downstream of the heat exchanger, the diverted airflow pathway including a non-linear segment of the heat exchanger duct 38 having a lowermost portion 38e disposed lower than a junction between the heat exchanger duct 38 and the exhaust duct 30 relative to a central longitudinal axis 11 of the aircraft engine 10.

It can be appreciated from the foregoing that at least some embodiments have a passive, airflow-based system for preventing hot exhaust gasses from travelling upstream a heat exchanger duct, thereby allowing temperature-sensitive components of the heat exchanger to be protected at engine shutdown.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. An aircraft engine (10) having a central longitudinal axis (11), comprising:
an exhaust duct (30) receiving a gas flow from the aircraft engine (10); and
a heat exchanger duct having an air inlet (36) receiving a flow of cooling air (36a), an air outlet (30c) fluidly connected to the exhaust duct (30) at a first height (D1) relative to the central longitudinal axis (11), and a duct wall (38d) extending from the air inlet (36) to the air outlet (30c), an air-cooled heat exchanger (34) disposed in the heat exchanger duct between the air inlet (36) and the air outlet (30c), the duct wall (38d) having a first section (38a) downstream of the air-cooled heat exchanger (34) and a second section (38b) downstream of the first section (38a) with a lowermost portion (38e) of the duct wall (38d) located at a junction between the first section (38a) and the second section (38b, the lowermost portion (38e) having a maximum second height (D2) relative to the central longitudinal axis (11), wherein the second height (D2) is less than the first height (D1).

2. The aircraft engine as defined in claim 1, wherein the heat exchanger duct has an elbow defining a fluid flow direction change at the lowermost portion (38e) of the duct wall (38d), and wherein the elbow is preferably defined by an angled junction between sections (38a, 38b) of the duct wall (38d).

3. The aircraft engine as defined in claim 1 or 2, wherein the duct wall (38d) includes a third section (38c) between the second section (38b) and the air outlet (30c) with a local uppermost portion (38f) of the duct wall (38d) located at a junction between the second section (38b) and the third section (38c), the duct wall (38d) at the local uppermost portion (38f) having a minimum third height (D3) greater than the first height (D1).

4. The aircraft engine as defined in any of the preceding claims, further comprising a valve (46) in the duct wall (38d) of the heat exchanger duct between the lowermost portion (38e) of the duct wall (38d) and the air outlet (30c), the valve (46) selectively fluidly connecting the heat exchanger duct to an evacuation location, such as an ambient air source adjacent to the aircraft engine (10), the valve (46) being movable between a closed position during an operating condition of the aircraft engine (10) to fluidly disconnect the heat exchanger duct to the evacuation location, and an open position during a shutdown condition of the aircraft engine (10) to fluidly connect the heat exchanger duct to the evacuation location.

5. The aircraft engine as defined in claim 4, wherein the valve (46) includes a spring (46b) operatively connected to a hinged door (46a), the spring (46b) having a spring force biasing the hinged door (46a) into the open position, and wherein the flow of cooling air (36a) is at a first pressure during the operating condition of the aircraft engine (10) and a second pressure during the shutdown condition of the aircraft engine (10), a first force generated on the hinged door (46a) by the flow of cooling air (36a) at the first pressure being greater than a second force generated on the hinged door (46a) by the flow of cooling air (36a) at the second pressure, the first and second forces opposing the spring force, the spring force being greater than the second force and less than the first force.

6. The aircraft engine as defined in claim 4, wherein the valve (46) is a thermally activated valve (46), the thermally activated valve (46) operable to bias towards the closed position below a predetermined temperature associated with the operating condition of the aircraft engine (10) and towards the open position above the predetermined temperature.

7. The aircraft engine as defined in any of the preceding claims, further comprising an additional duct having an additional duct inlet at a location in the exhaust duct (30) downstream of the air outlet (30c) relative to a flow direction of the gas flow through the exhaust duct (30).

8. A heat exchanger duct assembly for an aircraft engine (10) having an engine central longitudinal axis (11), comprising:
a heat exchanger duct having a duct wall (38d) extending from an air inlet (36) to an air outlet (30c), the air inlet (36) connectable to a source of pressurized air, the air outlet (30c) fluidly connectable to an exhaust duct (30) of the aircraft engine (10);
an air-cooled heat exchanger (34) disposed between the air inlet (36) and the air outlet (30c);
a first duct wall portion of the duct wall (38d) extending from the air inlet (36a) to the air-cooled heat exchanger (34); and
a second duct wall portion of the duct wall (38d) extending from the air-cooled heat exchanger (34) to the air outlet (30c), the second duct wall portion including a lowermost portion (38e), an entirety of the duct wall (38d) at the lowermost portion (38e) being lower than the air outlet (30c) relative to the engine central longitudinal axis (11).

9. The heat exchanger duct assembly as defined in claim 8, wherein the heat exchanger duct has an elbow defining a fluid flow direction change at the lowermost portion (38e) of the duct wall (38d), wherein the elbow is preferably defined by an angled junction between sections (38a, 38b) of the duct wall (38d).

10. The heat exchanger duct assembly as defined in claim 8 or 9, wherein the second duct wall portion of the duct wall (38d) includes a local uppermost portion (38f) between the lowermost portion (38e) and the air outlet (30c), an entirety of the duct wall (38d) at the local uppermost portion (38e) being higher than the air outlet (30c) relative to the engine central longitudinal axis (11).

11. The heat exchanger duct assembly as defined in any of claims 8 to 10, further comprising an evacuation valve (46) in the second duct wall portion between the lowermost portion (38e) and the air outlet (30c), the evacuation valve (46) selectively openable for venting exhaust gas from the heat exchanger duct.

12. The heat exchanger duct assembly as defined in claim 11, wherein the evacuation valve (46) includes a spring (46b) operatively connected to a hinged door (46a), the spring (46b) having a spring force biasing the hinged door (46a) into an open position, and wherein the pressurized air is at a first pressure during an operating condition of the aircraft engine (10) and a second pressure during a shutdown condition of the aircraft engine (10), a first force generated on the hinged door (46a) by the pressurized air at the first pressure being greater than a second force generated on the hinged door (46a) by the pressurized air at the second pressure, the first and second forces opposing the spring force, the spring force being greater than the second force and less than the first force.

13. A method of operating an aircraft engine (10), comprising:
operating the aircraft engine (10) in a powered mode that includes passing a gas through a heat exchanger (34) in a heat exchanger duct towards an exhaust duct (30) of the aircraft engine (10); and
transitioning the aircraft engine (10) from the powered mode into shut down, the transitioning including preventing exhaust gas from flowing from the exhaust duct (30) towards the heat exchanger (34) by navigating the exhaust gas through a diverted airflow pathway (40) in the heat exchanger duct downstream of the heat exchanger (34), the diverted airflow pathway (40) including a non-linear segment of the heat exchanger duct having a lowermost portion (38e) disposed lower than a junction (30c) between the heat exchanger duct and the exhaust duct (30) relative to a central longitudinal axis (11) of the aircraft engine (10).

14. The method as described in claim 13, wherein the preventing exhaust gas from flowing from the exhaust duct (30) towards the heat exchanger (34) further includes flowing the exhaust gas towards an apex (38f) in the heat exchanger duct disposed between the lowermost portion (38e) and the junction (30c), the apex (38f) disposed higher than the junction (30c) relative to the central longitudinal axis (11) of the aircraft engine (10).

15. The method as described in claim 13 or 14, wherein the preventing exhaust gas from flowing from the exhaust duct (30) towards the heat exchanger (34) further includes flowing the exhaust gas through a valve (46) in the heat exchanger duct towards an evacuation location, the valve (46) biased open as the aircraft engine (10) is transitioned to shut down.
